# EUROPEAN PATENT APPLICATION

(11) **EP 1 598 733 A2**
(43) Date of publication of application: **23.11.2005**
(21) Application number: 05010879.4
(22) Date of filing: 19.05.2005
(51) Int. Cl.: G06F 3/00, G06F 3/033

(54) **Haptic feedback input device**

(30) Priority: 21.05.2004 JP 2004152048
(71) Applicant: ALPS ELECTRIC CO., LTD., Tokyo 145-8501 (JP)
(72) Inventor: Hayakawa, Satoshi Alps Electric Co., Ltd., Tokyo 145-8501 (JP); Matsumoto, Ken Alps Electric Co., Ltd., Tokyo 145-8501 (JP)
(74) Representative: Klunker . Schmitt-Nilson . Hirsch

(57) **Abstract**

A haptic feedback input device includes an operation unit that calculates distances from the current position of a pointer to display positions at the peripheries of a plurality of buttons nearest to the pointer, based on coordinates at the current position of the pointer and positional information about the peripheries of the respective buttons displayed on a display unit, that finds one button whose periphery is displayed at a position closest to the current position of the pointer, and that drives first and second driving units such that the pointer is attracted to a central position of the found button.

## Description

### BACKGROUND OF THE INVENTION

### 1. Field of the Invention

The present invention relates to a haptic feedback input device used for, for example, car navigation systems, and more particularly, to a technique of improving the operability of a haptic feedback input device having a function of automatically attracting a pointer onto functional areas, such as menu selecting buttons, displayed on a display unit in order to facilitate the selection of a desired functional area.

### 2. Description of the Related Art

In order to facilitate locating a pointer with respect to buttons displayed on a display unit, generally, an image display device has been proposed, in which imaginary attractive areas are set around buttons, an attractive vector of the pointer is calculated from a central position and a current display position of the pointer when the pointer moves within the range of an attractive area of one button by operating an input device, such as a joystick or mouse, and the pointer is attracted to the central position of the button based on the attractive vector (For example, Japanese Unexamined Patent Application Publication No. 8-314637).

As an input device to control the movement of the pointer, generally, a haptic feedback input device has been proposed which includes an input unit that is operated by an operator and that detects the amount of movement; a display unit on which buttons and a pointer moved by the input unit are displayed, a position-detecting unit which calculates coordinates of the pointer displayed on the display unit based on the amount of movement of the input unit; and a driving unit which applies to the input unit attractive force in accordance with the coordinates of the pointer (for example, see Japanese Unexamined Patent Application Publication No. 7-120247).

In the meantime, as disclosed in Japanese Unexamined Patent Application Publication Nos. 8-314637 and 7-120247, which are the related arts, a plurality of buttons (input points) are generally displayed on the display unit in various arrangements. However, according to the above-mentioned related arts, when the attractive areas set for the plurality of buttons overlap each other, the related arts have no consideration for the control of the pointer attraction. Therefore, there is a problem in that the pointer may be attracted on a button not intended by a user.

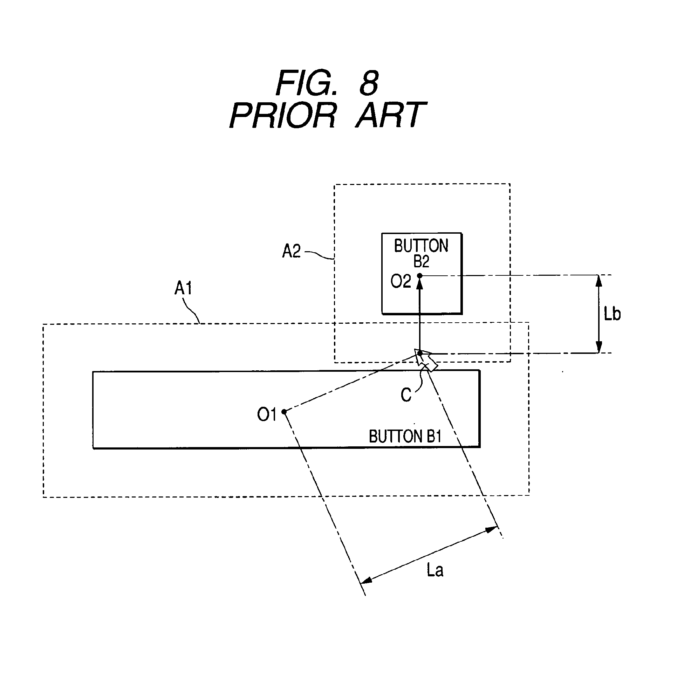

That is, since the buttons are, if necessary, additionally provided on or removed from the display screen, an attractive area of one button and an attractive area of another button, which are arranged adjacent to each other, may overlap each other. FIG. 8 shows a case in which a large-sized button B1 and a small-sized button B2 are arranged in the vertical direction so as to be adjacent to each other and an attractive area A1 of the button B1 and an attractive area A2 of the button B2 overlap each other. In this case, when the pointer C is located at an overlapping position between the attractive area A1 and the attractive area A2, as disclosed in Japanese Unexamined Patent Application Publication No. 8-314637, the attractive vector of the pointer C is calculated from the central positions of the buttons and the current display position of the pointer, and the pointer is attracted to the central position of the button. In such a display device, as shown in FIG. 8, in a case in which a distance La' from the display position of the pointer C to a display position at the periphery of the button B1 closest to the pointer C is smaller than a distance Lb' from the display position of the pointer C to a display position at the periphery of the button B2 closest to the pointer C, but a distance Lb from the display position of the pointer C to a central portion of the button B2 is smaller than a distance La from the display position of the pointer C to a central portion of the button B1, the movement of the pointer C is controlled such that the pointer C is attracted to the button B2.

However, when the distance La' from the display position of the pointer C to the display position at the periphery of the button B1 closest to the pointer C is smaller than the distance Lb' from the display position of the pointer C to the display position at the periphery of the button B2 closest to the pointer C, a user generally expects that the button B1 will be visually attracted to the button B1. However, when the pointer C is attracted to the button B2 contrary to the expectation, the user falls into disorder. As a result, it becomes difficult to perform a smooth operation of the operation unit.

### SUMMARY OF THE INVENTION

The present invention has been finalized in view of the drawbacks inherent in the conventional haptic feedback input device, and it is an object of the present invention to provide a haptic feedback input device capable of making an attractive direction of a pointer coincide with the movement direction of the pointer expected by a user, thereby improving operability.

According to an aspect of the invention, a haptic feedback input device includes an operating portion that is operated by a user; detecting units that detect an operation state of the operating portion; driving units that apply driving force to the operating portion; a display unit that displays a pointer and a plurality of functional areas; and a control unit that controls the display of the pointer based on signals output from the detecting units and that controls the driving of the driving units such that the pointer is attracted to one of the plurality of functional areas. In the haptic feedback input device, the control unit calculates distances from a display position of the pointer to display positions at peripheries of the respective functional areas closest to the pointer, and controls the driving of the driving units such that the pointer is attracted to one functional area located closest to the display position of the pointer.

As such, the distances from the display position of the pointer to the display positions at the peripheries of the respective functional areas closest to the pointer are calculated, and the pointer is attracted inside one button whose periphery is displayed at the closest position to the display position of the pointer. In this case, the pointer can be actually attracted onto a button that is expected by a user. Therefore, the haptic feedback input device is different from the haptic feedback input device of the related art in that the respective distances from the display position of the pointer to the central portions of the respective buttons are calculated and the pointer is attracted inside one button whose center is displayed at the closest position to the display position of the pointer. Therefore, it is possible to make the movement direction of a pointer expected by a user coincide with the actual movement direction of the pointer.

According to this aspect, preferably, the control unit controls the driving of the driving units such that the pointer is vertically attracted to the peripheries of the functional areas.

As such, when the pointer is vertically attracted to the periphery of the functional area, it is possible for the pointer to vertically move between the display position of the pointer and the display position at the peripheries of the respective functional areas. That is, it is possible to make the direction of a vertical line passing through the display position of the pointer coincide with the actual attracting direction of the pointer. Therefore, it is possible to improve the operation feeling of an operating portion.

### BRIEF DESCRIPTION OF THE DRAWINGS

FIG. 1 is a diagram showing the structure of a haptic feedback input device according to an embodiment of the invention;
FIG. 2 is a cross-sectional view of an input unit of the haptic feedback input device as viewed from one side;
FIG. 3 is a cross-sectional view of the input unit of the haptic feedback input device in plan view;
FIG. 4 is an explanatory view showing the operation of the haptic feedback input device according to the embodiment;
FIG. 5 is an explanatory view showing the relationship between a button and display areas of a pointer;
FIG. 6 is a flow chart showing the operation of an operation unit;
FIG. 7 is an explanatory view showing another operation of the haptic feedback input device according to the embodiment; and
FIG. 8 is an explanatory view showing the operation of the haptic feedback input device according to the related art.

### DESCRIPTION OF THE PREFERRED EMBODIMENT

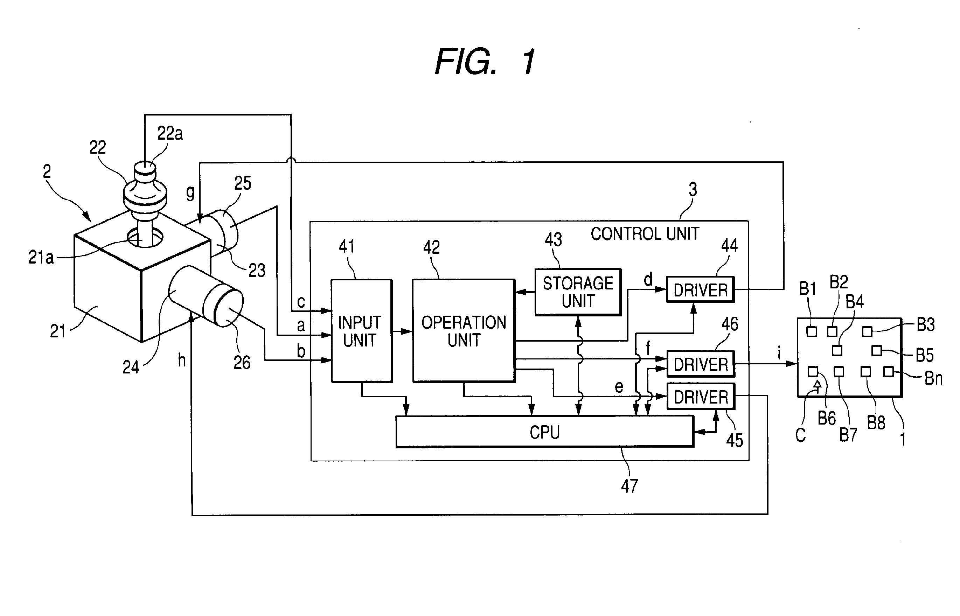

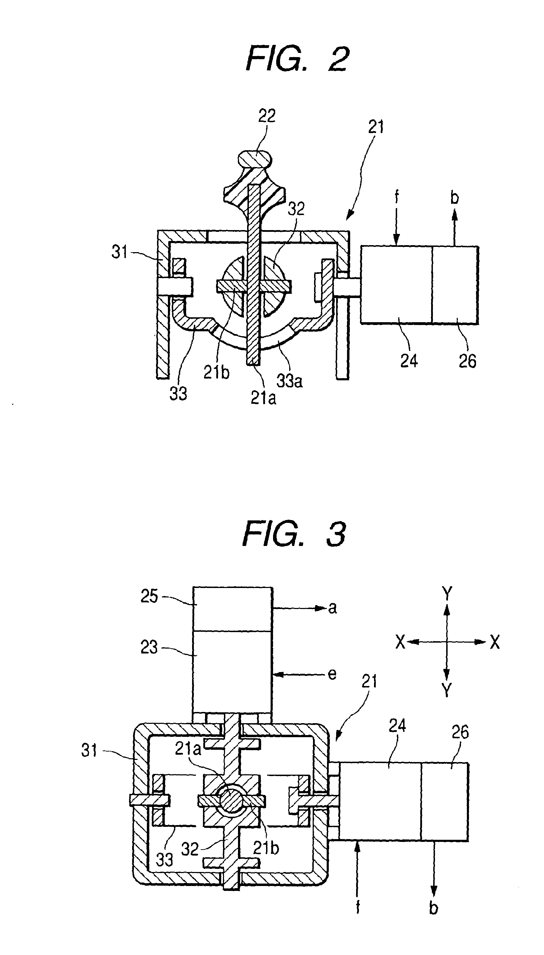

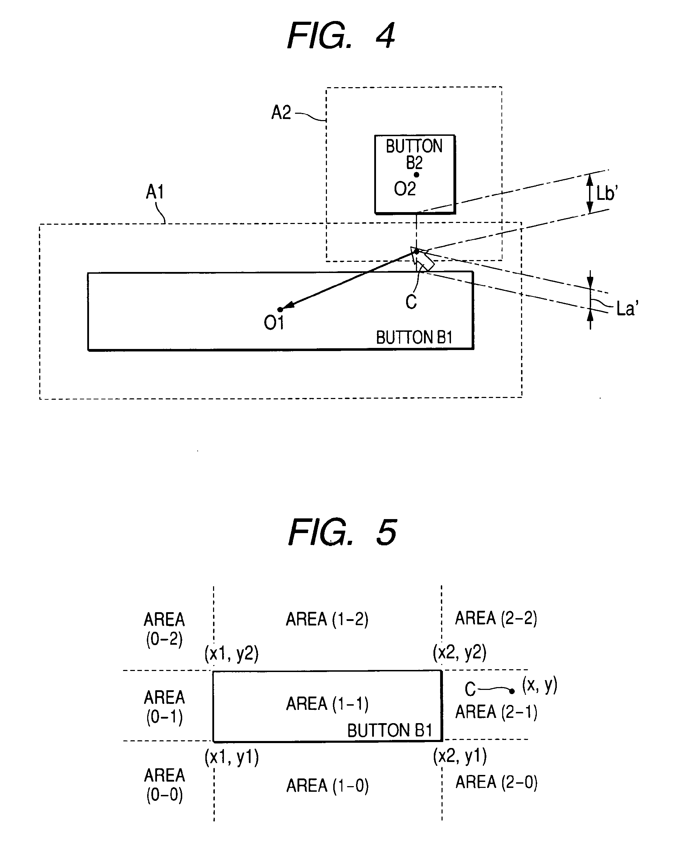

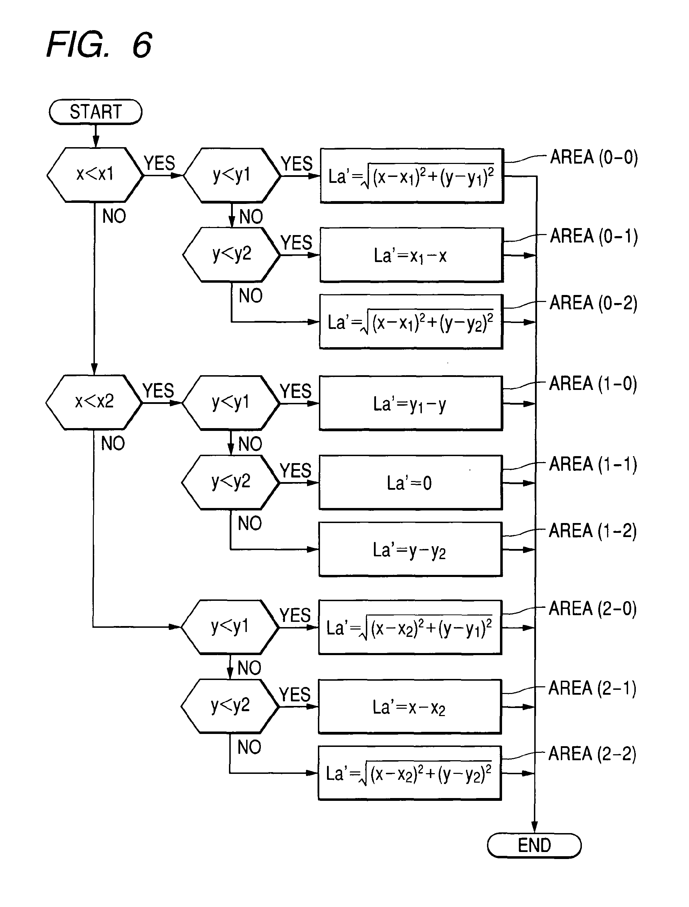

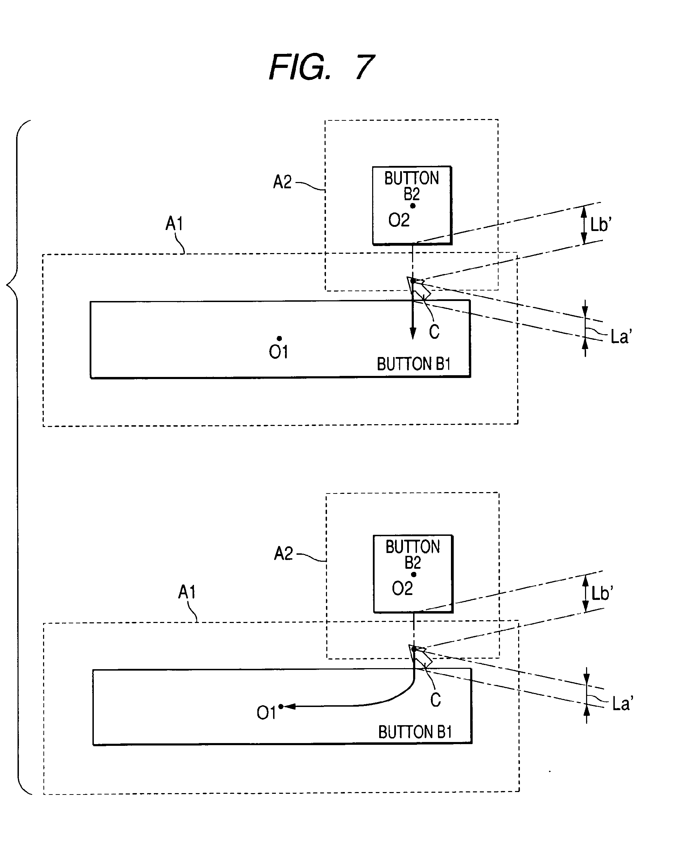

A haptic feedback input device according to an embodiment of the invention will now be described with reference to FIGS. 1 to 7. FIG. 1 is a diagram showing the structure of a haptic feedback input device according to an embodiment of the invention, and FIG. 2 is a cross-sectional view of an input unit of the haptic feedback input device according to this embodiment, as viewed from one side. FIG. 3 is a cross-sectional view of the input unit of the haptic feedback input device according to this embodiment in plan view, and FIG. 4 is an explanatory view showing the operation of the haptic feedback input device according to this embodiment. FIG. 5 is an explanatory view showing the relationships between buttons (functional areas) and display areas of a pointer according to this embodiment, and FIG. 6 is a flow chart showing the operation of an operation unit.
In addition, FIG. 7 is an explanatory view showing another operation of the haptic feedback input device according to this embodiment.

As shown in FIG. 1, the haptic feedback input device according to the present embodiment mainly includes a display unit 1 which has a pointer C and a plurality of buttons B1 to Bn and which displays a required image, an input unit 2 which moves the pointer C displayed on the display unit 1 and which selects the plurality of buttons B1 to Bn displayed on the display unit 1, and a control unit 3 which controls the display unit 1 and the input unit 2.

As the display unit 1, for example, a liquid crystal display device is used. In addition, coordinates of the pointer C and the buttons B1 to Bn are determined by an X-axis indicating the horizontal direction of the display unit 1 and a Y-axis indicating the vertical direction of the display unit 1. In addition, as shown in FIG. 4, attractive areas A1 to An for the pointer C (only the attractive areas A1 and A2 are shown in FIG. 4) are set around the respective buttons B1 to Bn (only the buttons B1 and B2 are shown in FIG. 4). Only when the pointer C is located in the attractive areas A1 to An, first and second driving units 23 and 24, which will be described in detail later, are driven, so that the pointer C is attracted to a central location of one button positioned closet to the pointer C.

As shown in FIG. 1, the input unit 2 includes a mechanism portion 21 having a rocking lever 21a, an operating portion 22 attached to a front end of the rocking lever 21a, first and second driving unit 23 and 24 for applying attractive force to the operating portion 22 via the rocking lever 21a, and first and second detecting units 25 and 26 for detecting the operation amount of the rocking lever 21a in two directions perpendicular to each other.

As shown in FIGS. 2 and 3, the mechanism portion 21 includes the rocking lever 21a, a case 31, and a lever holding shaft 32 and a swing arm 33 which are rotatably held in the case 31. In addition, the lever holding shaft 32 and the swing arm 33 are disposed perpendicular to each other, and the rocking lever 21a is attached to the lever holding shaft 32 so as to rotate only in a rotational direction of the swing arm 33. In addition, reference numeral 21b in the drawings indicates a central shaft of the movement of the rocking lever 21a. On the other hand, an elongated slit 33a is formed in the swing arm 33, and a lower end of the rocking lever 21a passes through the elongated slit 33a. The width of the elongated slit 33a is slightly larger than the diameter of the lower end of the rocking lever 21a. The lower end of the rocking lever 21a can freely swing in the elongated slit 33a when the rocking lever 21a swings in the rocking direction (X-X direction) with the rotation of the lever holding shaft 32. In addition, the swing arm 33 can integrally swing with the rocking lever 21a when the rocking lever 21a swings in a direction (Y-Y direction) with the rotation of the central shaft 21b.

In this structure, the rocking lever 21a can swing in any direction about the lever holding shaft 32 and the central shaft 21b. In addition, the lever holding shaft 32 rotates in the swinging direction of the rocking lever 21a by the amount of rotation in proportion to the amount of the swinging movement of the rocking lever 21a in the X-X direction. The swing arm 33 rotates in the swinging direction of the rocking lever 21a by the amount of rotation in proportion to the amount of the swinging movement of the rocking lever 21a in the Y-Y direction.

The operating portion 22 is formed in a shape and a size that can be operated by an operator, and a selection switch 22a is provided at a part of the operating portion 22 to select the buttons B1 to Bn displayed on the display unit 1.

As the first and second driving units 23 and 24, for example, electromotive motors can be used. In addition, the first driving unit 23 is coupled with the above-described lever holding shaft 32 to drive the operating portion 22 in the X-axis direction of the display unit 1. In contrast, the second driving unit 24 is coupled with the swing arm 33 to drive the operating portion 22 in the Y-axis direction of the display unit 1.

In addition, as the first and second detecting units 25 and 26, for example, rotary encoders or variable resistors can be used. The first and second detecting units 25 and 26 are respectively coupled with the rotational axes of the driving units 23 and 24 to detect the rotation amount and direction of each rotational shaft, and output electric signals in accordance with the detected results.

As shown in FIG. 1, the control unit 3 includes an input unit 41 for receiving a first detecting signal a output from the first detecting unit 25, a second detecting signal b output from the second detecting unit 26, and a switching signal c output from the selection switch 22a; an operation unit 42 for calculating the moving direction and the moving amount of the pointer C based on the first and second detecting signals a and b, for calculating driving signals d and e of the first and second driving units 23 and 24 based on the first and the second detecting signals a and b, and for switching display screens based on the switching signal c; a storing unit 43 stored with formulas and coefficients for calculation, the coordinates of the pointer-attractive areas A1 to An, and the coordinates of central portions O1 to On of the respective buttons B1 to Bn; first and second driver circuits 44 and 45 for driving the first and second driving units 23 and 24 by outputting motor driving power components g and h in response to the motor driving signals d and e output from the operation unit 42; a third driver circuit 46 for driving the display unit 1 by outputting a display unit driving power component i in response to a display unit driving signal f output from the operation unit 42; and a CPU 47 for controlling the above-described units 41 to 46.

When the operating portion 22 is operated, the operation unit 42 calculates the operation direction and the operation amount of the operating portion 22, based on the first positional signal a, the second positional signal b, formulas and coefficients, etc., stored in the storage unit 43, and the CPU moves the pointer C displayed on the display unit 1 by the amount corresponding to the operation amount of the operating portion 22 in a direction corresponding to the operation direction of the operating portion 22, based on the calculated result.

In addition, as shown in FIG. 4, the operation unit 42 calculates distances La' and Lb' from the current position of the pointer C to the display positions of the peripheries of the respective buttons B1 to Bn located closest to the pointer C, based on coordinates (x, y) of the current position of the pointer C and positional information about the peripheries of the respective buttons B1 to Bn displayed on the display unit 1, finds one button (for example, the button B1 shown in Fig. 4) whose periphery is located closest to the current position of the pointer C, and drives the first and second driving units 23 and 24 so as to attract the pointer C to the central portion O1 of the found button.

When the distances La', Lb', and the like are calculated, the operation unit 42 performs calculation according to a method shown in FIG. 5 and a sequence shown in FIG. 6. In addition, for the convenience of description, FIGS. 5 and 6 exemplarily show only a calculation method and a calculation sequence of the distance La' from the pointer C to the periphery of the button B1. The operation unit 42 determines whether the position of the pointer C with respect to the button B1 is in any of areas (0-0) to (2-2) and calculates the distance La' with arithmetic formulas according to the respective areas. That is, as shown in FIG. 5, in a case in which coordinates of four corners of the button B1 are (x1, y2), (x2, y2), (x1, y1), and (x2, y1), if it is determined that the pointer C is the area (0-0), the distance La' from the pointer C to the periphery of the button B1 closest to the pointer C is calculated using the following arithmetic formula: La' = √[(x - x1)² + (y -y1 )²]. In the same manner, when it is determined that the pointer C is in the area (0-1), the distance La' from the pointer C to the periphery of the button B1 closest to the pointer C is calculated using the following expression: La' = √[(x - x1)² + (y - y2)²]. When it is determined that the pointer C is in the area (1-0), the distance La' from the pointer C to the periphery of the button B1 closest to the pointer C is calculated using the following expression: La' = y - y. When it is determined that the pointer C is in the area (1-1), the distance La' from the pointer C to the periphery of the button B1 closest to the pointer C is calculated using the following expression: La' = 0. When it is determined that the pointer C is in the area (1-2), the distance La' from the pointer C to the periphery of the button B1 closest to the pointer C is calculated using the following expression: La' = y - y2. In the same manner, when it is determined that the pointer C is in the area (2-0), the distance La' from the pointer C to the periphery of the button B1 closest to the pointer C is calculated using the following expression: La' = √[(x - x2)² + (y - y1)²]. When it is determined that the pointer C is in the area (2-1), the distance La' from the pointer C to the periphery of the button B1 closest to the pointer C is calculated using the following expression: La' = x - x2. When it is determined that the pointer C is in the area (2-2), the distance La' from the pointer C to the periphery of the button B1 closest to the pointer C is calculated using the following expression: La' = √[(x - x2)² + (y - y2)²].

In the haptic feedback input device according to the present embodiment, the distances La', Lb', and the like from the current display position of the pointer C to the display positions of the peripheries of the respective buttons B1 to Bn located at the closest positions to the pointer C are calculated, and the driving units 23 and 24 are controlled such that the pointer is attracted to the button located closest to the pointer. That is, since the pointer C is attracted inside one button whose periphery is displayed closest to the display position of the pointer C, the haptic feedback input device of the present embodiment is different from the haptic feedback input device of the related art in that the distances La, Lb, and the like from the display position of the pointer C to the central portions O1 to On of the respective buttons B1 to Bn are calculated and the pointer C is attracted inside one button whose center exists at the closest position to the display position of the pointer C (see FIG. 8). In addition, it is possible to align the actual attractive direction of the pointer C with the attractive direction of the pointer C which a user recognizes or waits for, and thus to improve the operability of the operation unit 22.

In addition, according to the above-mentioned embodiment, the pointer C is linearly attracted to the central portion O1 of one button B1 from the display position of the current pointer C. However, the invention is not limited thereto, and it is possible to control the driving units 23 and 24 such that the pointer C is attracted in the vertical direction with respect to the peripheries of the respective buttons B1 to Bn, as shown in FIG. 7. In this case, as shown in the upper part of FIG. 7, the moving control of the pointer C can be stopped at a stage where the pointer C enters display ranges of the respective buttons B1 to Bn. In addition, as shown in the lower part of FIG. 7, the moving control of the pointer C can be performed such that the pointer C moves to the central portions O1 to On of the respective buttons B1 to Bn after the pointer C enters the display ranges of the respective buttons B1 to Bn.

As such, when the pointer C is vertically attracted to the peripheries of the respective buttons B1 to Bn, it is possible to align the actual direction with a longitudinal direction corresponding to the distances from the display position of the pointer C to the display positions at the peripheries of the respective buttons B1 to Bn closest to the pointer C, so that it is possible to improve the operation feeling of the operation unit 22.

In addition, according to the present embodiment, the haptic feedback input device is exemplified in which finite attractive areas A1 to An are set up around the respective buttons B1 to Bn. However, the invention is not limited thereto, and the respective attractive areas A1 to An can be infinitely set around the respective buttons B1 to Bn. Even if the pointer C moves to any position excluding the display unit of the button, the invention can be applied to a haptic feedback input device in which the pointer C is attracted onto one button displayed at the closest position to the current position of the pointer C.

In addition, according to the above-mentioned embodiment, the button is exemplified as an example of the functional area. However, the invention is not limited to the button to perform the push down operation.

As described above, according to the haptic feedback input device of the invention, the distances from the display position of the pointer to the display positions at the peripheries of the respective functional areas closest to the pointer are calculated, and the pointer is attracted inside one button whose periphery is displayed at the closest position to the display position of the pointer. Therefore, the operation of the pointer, which the user recognizes and waits for, can become equal to the actual operation. As a result, it is possible to improve the operability of an operating portion.

## Claims

1. A haptic feedback input device comprising:
an operating portion (22) that is operated by a user;
detecting units (25, 26) that detect an operation state of the operating portion (22);
driving units (23, 24) that apply driving force to the operating portion (22);
a display unit (1) that displays a pointer and a plurality of functional areas; and
a control unit (3) that controls the display of the pointer based on signals output from the detecting units (25, 26) and that controls the driving of the driving units (23, 24) such that the pointer is attracted to one of the plurality of functional areas,
**characterized in that** the control unit (3) calculates distances from a display position of the pointer to display positions at peripheries of the respective functional areas closest to the pointer, and controls the driving of the driving units such that the pointer is attracted to one functional area located closest to the display position of the pointer.

2. The haptic feedback input device according to Claim 1,
**characterized in that** the control unit controls the driving of the driving units (23, 24) such that the pointer is vertically attracted to the peripheries of the functional areas.
